(19)

Europäisches
Patentamt
European
Patent Office
Office européen
des brevets

(11) **EP 2 507 857 B1**

(12) **EUROPEAN PATENT SPECIFICATION**

(45) Date of publication and mention
of the grant of the patent:
**31.01.2024 Bulletin 2024/05**

(21) Application number: **10835021.6**

(22) Date of filing: **01.12.2010**

(51) International Patent Classification (IPC):
**H01M 4/133** (2010.01)    **H01M 4/1393** (2010.01)
**H01M 4/587** (2010.01)

(52) Cooperative Patent Classification (CPC):
**H01M 4/133; H01M 4/1393; H01M 4/587;**
**Y02E 60/10**

(86) International application number:
**PCT/US2010/058489**

(87) International publication number:
**WO 2011/068825 (09.06.2011 Gazette 2011/23)**

(54) **NON-AQUEOUS CELL HAVING A MIXTURE OF FLUORINATED CARBON CATHODE MATERIALS**

WASSERFREIE ZELLE MIT EINER MISCHUNG AUS FLUORIERTEN
KOHLENSTOFFKATHODENMATERIALIEN

PILE NON AQUEUSE COMPRENANT UN MÉLANGE DE MATÉRIAUX DE CATHODE
FLUOROCARBONÉS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **04.12.2009 US 266628 P**

(43) Date of publication of application:
**10.10.2012 Bulletin 2012/41**

(73) Proprietor: **EaglePicher Technologies, LLC**
**Joplin, MO 64801 (US)**

(72) Inventors:
• **ZHANG, Dong**
**Joplin, MO 64801 (US)**
• **DESTEPHEN, Mario**
**Joplin, MO 64801 (US)**

• **VU, Viet**
**Carl Junction, MO 64834 (US)**
• **CHANG, Jeremy Chi-Han**
**Webb City, MO 64870 (US)**
• **BANG, Hyun Joo**
**Joplin, MO 64801 (US)**

(74) Representative: **Gill Jennings & Every LLP**
**The Broadgate Tower**
**20 Primrose Street**
**London EC2A 2ES (GB)**

(56) References cited:
**WO-A1-2008/113023      JP-A- 2006 236 888**
**US-A- 4 126 588      US-A- 5 246 796**
**US-A1- 2007 072 075      US-A1- 2007 281 213**

**Description**

**CROSS-REFERENCE TO RELATED APPLICATION**

The present application claims the benefit of U.S. Provisional Application No. 61/266,628, filed December 4, 2009.

**FIELD OF THE DISCLOSURE**

The present disclosure relates generally to a cathode material suitable for use in a non-aqueous electrochemical cell that comprises a mixture of fluorinated carbon materials, and more particularly such a cell that comprises a mixture of three fluorinated carbon materials that each have distinct (from each other) discharge profiles (e.g., distinct voltages and capacities). The present disclosure additionally relates to a non-aqueous electrochemical cell comprising such cathode material and, in particular, to such a non-aqueous electrochemical cell that is lithium-based (i.e., a lithium, or lithium ion, non-aqueous electrochemical cell).

**BACKGROUND OF THE DISCLOSURE**

Lithium electrochemical cells, which are more commonly referred to as batteries, are widely used in a variety of military and consumer products. Many of these products utilize high energy and high power batteries. Due in part to the miniaturization of portable electronic devices, it is desirable to develop even smaller lithium batteries with an increased power capability and service life. One way to develop smaller batteries with increased power capability is to develop higher energy cathode materials.

One example of a high energy cathode material is fluorinated carbon (i.e., CF). To-date, Li anode/CF cathode cells have been used in low or intermediate power devices including, for example, the military, aerospace, electronic, and medical fields (the discharge rate usually spanning, for example, from about 0.1 W/cc (i.e., about C/10) to about $2 \times 10^{-5}$ W/cc (i.e., about C/50,000)). In the medical field, Li anode/CF cathode cells are currently used to power implantable medical devices with low or intermediate power requirements. However, in spite of its high energy density and excellent stability, the Li/CF cathode cells have not been used in high-rate applications, such as implantable cardiac defibrillators (or ICDs), due to the low operating voltage and limited power capabilities resulting from the high electrical resistivity of the cathode matrix. WO 2008/113023 A1 discloses a non-aqueous electrochemical cell comprising a cathode comprising a first fluorinated carbon material and a second fluorinated carbon material wherein the first fluorinated carbon material can be for instance CF1, and the second fluorinated carbon material can be CF0.744. The amount of the first fluorinated carbon material is 5-95 wt.% based on the total weight of first and second fluorinated carbon material. The cathode material is mixed with acetylene black graphite and a PVDF binder. The electrolyte can be LiBF4. JP 2006 236888 A discloses a non-aqueous electrochemical cell comprising a cathode comprising: a first fluorinated carbon material having the composition CFX, wherein $0.95 \leq x \leq .05$ and a second fluorinated carbon material having the composition CFy, wherein $0.45 \leq x \leq 0.90$. The amount of second fluorinated carbon material is 10-60 wt.% based on the total weight of fluorinated carbon material. The cathode material is mixed with acetylene black and a PTFE binder and the electrolyte can be for instance LiBF4 and the anode metallic lithium.

Accordingly, a need continues to exist for cathode materials suitable for high voltage applications, including high-rate pulse discharge applications, and more particularly such cathode materials that are additionally characterized by a high energy density.

**SUMMARY OF THE DISCLOSURE**

Briefly, therefore, the present disclosure is directed to a non-aqueous electrochemical cell comprising: (i) an anode; (ii) a hybrid cathode comprising a first fluorinated carbon cathode material, a second fluorinated carbon cathode material, and a third fluorinated carbon cathode material, wherein (a) the first or third fluorinated carbon cathode material has an average degree of fluorination that is distinct from the second fluorinated carbon cathode material, and (b) the first fluorinated carbon cathode material is derived from petroleum coke, while the third fluorinated carbon cathode material is derived from petroleum pitch; (iii) a separator disposed between the anode and the cathode; and, (iv) a non-aqueous electrolyte which is in fluid communication with the anode, the cathode and the separator. Optionally, the second fluorinated carbon cathode material is derived from petroleum coke, as well, and/or the first and third fluorinated carbon cathode materials have about the same average degree of fluorination.

The present disclosure is additionally or alternatively directed to a non-aqueous electrochemical cell comprising: (i) an anode; (ii) a hybrid cathode comprising a first fluorinated carbon cathode material, a second fluorinated carbon cathode material, and a third fluorinated carbon cathode material, wherein (a) the first, second and third fluorinated carbon cathode materials each exhibiting a discharge voltage at or above about 2.5 volts that is distinct from the other two, and (b) upon being discharged to about 1.5 volts, the first fluorinated carbon cathode material has a discharge capacity of from about 800 mAh/g to about 870 mAh/g, the second fluorinated carbon cathode material has a discharge capacity of from about 680 mAh/g to about 800 mAh/g, and the third fluorinated carbon cathode material has a discharge capacity of from about 825 mAh/g to about 875 mAh/g; (iii) a separator disposed between the anode and the cathode; and, (iv) a non-aqueous electrolyte which is in fluid communication with the anode, the cathode and the separator. Optionally, the first and second fluorinated carbon cathode materials are derived from petroleum coke, and/or the third fluorinated carbon cathode material is derived from petroleum pitch.

The present disclosure is still further directed to various electronic devices comprising such a non-aqueous electrochemical cell.

It is to be noted that one or more of the additional features detailed below may be incorporated into one or more of the above-noted embodiments, without departing from the scope of the present disclosure.

## BRIEF DESCRIPTION OF THE FIGURES

Figure 1 is a photo of bead-shaped activated carbon derived from petroleum pitch before fluorination.

Figure 2 is a microphoto of a fluorinated carbon particle useful as a cathode material.

Figure 3 is a graphical illustration of the x-ray diffraction patterns of a petroleum coke-derived fluorinated carbon ($CF_1$) and a beaded petroleum pitch-derived fluorinated carbon.

Figure 4 is a graphical illustration of the x-ray photoelectron spectra (F1s) of the particle surfaces of petroleum coke derived fluorinated carbon ($CF_1$).

Figure 5 is a graphical illustration of the x-ray photoelectron spectra (C1s) of the particle surfaces of petroleum coke-derived fluorinated carbon ($CF_1$).

Figure 6 is a graphical illustration of the x-ray photoelectron spectra (F1s) of the particle surfaces of beaded petroleum pitch-derived fluorinated carbon.

Figure 7 is a graphical illustration of the x-ray photoelectron spectra (C1s) of the particle surfaces of beaded petroleum pitch-derived fluorinated carbon.

Figure 8 is a graphical illustration of the discharge profile of a petroleum coke-derived fluorinated carbon ($CF_1$) using a discharge rate of 20 mA/g at room temperature.

Figure 9 is a graphical illustration of the discharge profile of a petroleum coke-derived fluorinated carbon ($CF_{0.6}$) using a discharge rate of 20 mA/g at room temperature.

Figure 10 is a graphical illustration of the discharge profile of a beaded petroleum pitch-derived fluorinated carbon using a discharge rate of 20 mA/g at room temperature.

Figure 11 is a graphical illustration of the discharge profile of a hybrid cathode of one embodiment of the present disclosure containing the fluorinated carbons used to generate the data of Figures 8-10 using a discharge rate of 20 mA/g at room temperature.

Figure 12 is a graphical illustration of the discharge profiles of a prior art Li/CF electrochemical cell and a Li/CF non-aqueous electrochemical cell of the present disclosure containing a hybrid cathode of an embodiment of the present disclosure using a 50 J pulse.

Figure 13 is a graphical illustration of the discharge profiles of an electrochemical cell containing beaded petroleum pitch-derived fluorinated carbon and a hybrid cathode of an embodiment of the present disclosure using a 50 J pulse.

Figure 14 is a graphical illustration of the discharge profiles of an electrochemical cell containing beaded petroleum pitch-derived fluorinated carbon and a hybrid cathode of an embodiment of the present disclosure using an 80 J pulse.

Figure 15 is a graphical illustration of the heat generated during discharge of an electrochemical cell containing beaded petroleum pitch-derived fluorinated carbon and a cell containing petroleum coke-derived fluorinated carbon ($CF_1$).

## DETAILED DESCRIPTION OF THE DISCLOSURE

The present disclosure is directed to a hybrid cathode that contains a number of distinct cathode materials and, more particularly, three distinctly different fluorinated carbon (CF) cathode materials. The fluorinated carbon cathode materials are distinct in that each exhibits a distinct discharge profile (i.e., a distinct discharge voltage at or above about 2.5 volts, and a distinct discharge capacity when discharged to about 1.5 volts), and/or that one or more is derived from different carbon sources (e.g., petroleum coke or petroleum pitch). More particularly, the three distinct fluorinated carbon cathode materials may be characterized, in one embodiment, by (a) the first or third fluorinated carbon cathode material having an average degree of fluorination that is distinct from the second fluorinated carbon cathode material, and (b) the first fluorinated carbon cathode material, and optionally the second fluorinated carbon cathode material, are derived from petroleum coke, while the third fluorinated carbon cathode material is derived from petroleum pitch. Additionally, the first and third fluorinated carbon cathode materials may have an average degree of fluorination that is about the same.

In this or an alternative embodiment, the three distinct fluorinated carbon cathode materials may be characterized by (a) the first, second and third fluorinated carbon cathode materials each exhibiting a discharge voltage at or above about 2.5 volts that is distinct from the other two, and (b) upon being discharged to about 1.5 volts, the first fluorinated carbon cathode material having a discharge capacity of from about 800 mAh/g to about 870 mAh/g, the second fluorinated carbon cathode material having a discharge capacity of from about 680 mAh/g to about 800 mAh/g, and the third fluorinated carbon cathode material having a discharge capacity of from about 825 mAh/g to about 875 mAh/g.

The present disclosure is further directed to a non-aqueous electrochemical cell that includes such cathode materials, particularly a cell that is lithium-based (i.e., a lithium, or lithium ion, non-aqueous electrochemical cell). The each of the three distinct cathode materials of the present disclosure advantageously contribute to, and act to enhance or improve, the performance properties of the non-aqueous electrochemical cell of which they are a part. For example, in one particular embodiment, the three cathode materials act to improve or enhance the overall operating voltage and/or energy density of the non-aqueous electrochemical cell of which they are a part, enabling a high operating voltage (a voltage of, for example, above about 2.5 volts) and/or high energy density to be achieved.

In this regard it is to be noted that, as used herein, "non-aqueous" refers to an electrochemical cell that comprises or utilizes an electrolyte that contains no added water; that is, water was not added to the electrolyte as a separate or distinct component thereof, but nevertheless may be present as a trace or underlying component or contaminant of the organic solvent(s) used to prepare it. For example, in one or more non-limiting embodiments of the present disclosure, the electrolyte may typically have a water content of less than about 1000 ppm, less than about 750 ppm, less than about 500 ppm, less than about 250 ppm, less than about 100 ppm, less than about 50 ppm, less than about 25 ppm, or even less.

In this regard it is to be further noted that an "electrochemical cell" may otherwise be referred to herein as a battery, a capacitor, a cell, an electrochemical device, or the like. It should be understood that these references are not limiting, and any cell that involves electron transfer between an electrode and an electrolyte is contemplated to be within the scope of the present disclosure.

In this regard it is to be still further noted that "improved" or "enhanced" performance properties generally refers to an improvement or enhancement in the specific energy, the energy density, the operating voltage and/or the rate capability of the non-aqueous electrochemical cell of the present disclosure, as compared for example to a non-aqueous electrochemical cell that is similarly prepared or designed but that does not contain two or more distinct fluorinated carbon cathode materials as detailed herein.

## 1. Cathode Material Composition and Cell Components

In accordance with the present disclosure, and as further detailed herein below, it has been discovered that one or more performance properties of a non-aqueous electrochemical cell may be improved or enhanced by the use of a cathode containing three distinct fluorinated carbon materials (i.e., a "hybrid cathode" is used). In this regard, it is to be noted that it has been found that the combination of the three distinct fluorinated carbon materials results in a non-aqueous electrochemical cell with a high operating voltage and high energy density.

In accordance with the present disclosure, the first fluorinated carbon cathode material may generally be represented by the formula $CF_x$, wherein x has an average value from greater than about 0.9 to about 1.2, or from about 0.95 to about 1.15, and in one particular embodiment is about 1. The second fluorinated carbon cathode material may generally be represented by the formula $CF_y$, wherein y has an average value from about 0.4 to less than about 0.9, or from about 0.5 to about 0.7, and in one particular embodiment is about 0.6. The third fluorinated carbon cathode material may generally be represented by the formula $CF_z$, wherein z has an average value from about 0.8 to about 1.2, or from about 0.9 to about 1.1, and in one particular embodiment is about 1. In this regard it is to be noted that, in one or more particular embodiments, x, y and z each have an average value within the recited range that is different from the other. However, in one or more alternative embodiments, x and z may have an average value within the recited ranges that is about the same, but that is different from y.

In this regard it is to be further noted, in various embodiments, that the first, second and/or third component of the fluorinated carbon cathode materials may be derived from the same source of carbon (e.g., petroleum coke or pitch) or different sources, as explained more fully below. In one particular embodiment, however, the first fluorinated carbon cathode material, and optionally the second fluorinated carbon cathode material, are derived from petroleum coke, while the third fluorinated carbon cathode material is derived from petroleum pitch.

The total amount of fluorinated carbon cathode materials of the formula $CF_x$, where x has an average value of from greater than about 0.9 to about 1.2, may be from about 20 wt% to about 70 wt%, and more typically may be from about 25 wt% to about 65 wt% or from about 30 wt% to about 60 wt% (wherein "wt%" refers to the weight of the first fluorinated carbon cathode material relative to the total weight of the fluorinated carbon materials present in the cathode, and optionally by weight of the total amount of active cathode materials when no materials other than fluorinated carbon are preset in the cathode). Additionally, or alternatively, the amount of fluorinated carbon cathode materials of the formula $CF_y$, where y has an average value of from about 0.4 to less than about 0.9, may be from about 2 wt% to about 35 wt%, and more typically may be from about 4 wt% to about 30 wt% or from about 5 wt% to about 25 wt%. Additionally, or alternatively, the amount of fluorinated carbon cathode materials of the formula $CF_z$, where z has an average value of from about 0.8 to about 1.2, may be from about 10 wt% to about 90 wt%, and more typically may be from about 15 wt% to about 85 wt% or from about 20 wt% to about 80 wt%. In this regard it should be understood, however, that the concentration of each of these fluorinated carbon materials present in the cathode may be optimized for a given application or use, by means generally known in the art; as a result, the concentration of the first, second and third fluorinated carbon materials described above may be present in an amount other than as described herein, without departing from the scope of the present disclosure.

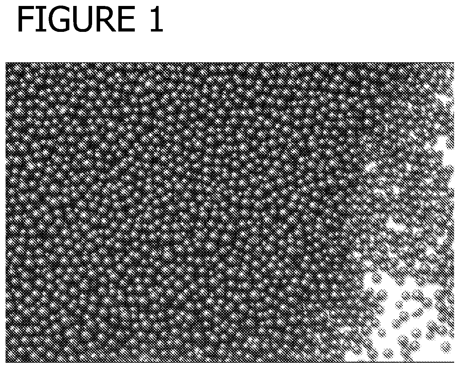

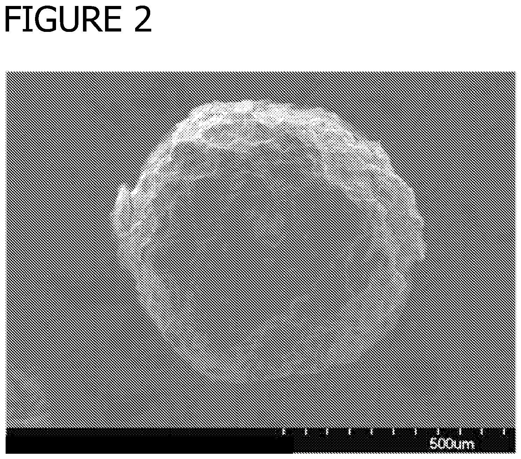

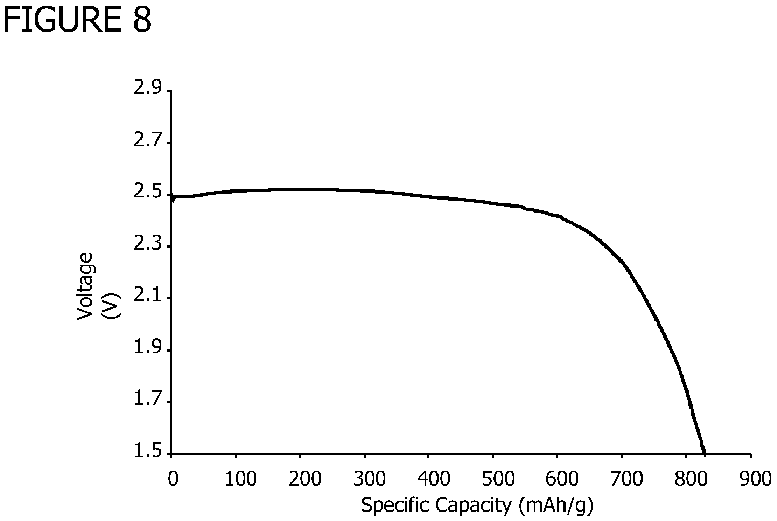

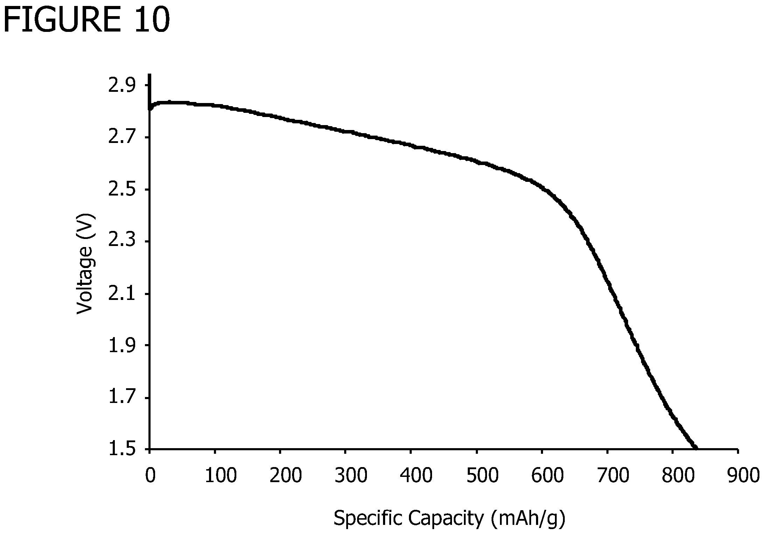

The fluorinated carbon material of the present disclosure may generally be prepared using methods or techniques generally known to one of ordinary skill in the art. For example, such material may generally be prepared by contacting a source of carbon with a fluorine containing gas. However, it has been found that the source of carbon may affect the discharge properties of the non-aqueous electrochemical cell, even when the materials have the same or similar degree of fluorination. For instance, a fluorinated carbon with a carbon to fluorine molar ratio of about 1:1 derived from petroleum coke (Fig. 8) has a different discharge profile than a fluorinated carbon with a similar molar ratio but which is derived from a beaded petroleum pitch (Fig. 10). In accordance with embodiments of the present disclosure, the carbon material may be derived from petroleum coke, beaded petroleum pitch (which may or may not be activated) (Figs. 1 and 2), other activated carbons (e.g., charcoal), and graphitic material, such as natural and synthetic graphite and all their derivatives including graphene, graphite nano-platelets, expanded graphite, carbon nanofiber and carbon nanotubes. Petroleum coke has been found to be particularly suitable for use as a cathode material. Beaded petroleum pitch is also suitable for use as a result of its small and narrowly distributed particle size, flowability, high purity and high strength and wear resistance.

Cathodes of the present disclosure may contain two or more fluorinated carbon cathode materials that differ in the source of carbon from which the cathode material is derived. In an exemplary embodiment, the cathode contains both fluorinated carbon material derived from petroleum coke and fluorinated carbon material derived from beaded and activated petroleum pitch. In this regard, the total amount of fluorinated carbon cathode materials derived from petroleum coke may be from about 20% to about 80% (for example at least about 30%, at least about 40%, at least about 50%, at least about 60%, at least about 70% and less than about 30%, less than about 40%, less than about 50%, less than about 60% or less than about 70%) by weight of the total amount of fluorinated carbon materials present in the cathode. In addition, the amount of fluorinated carbon cathode materials derived from beaded petroleum pitch may be from about 30% to about 80% (for example at least about 40%, at least about 50%, at least about 60%, at least about 70% and less than about 40%, less than about 50%, less than about 60% or less than about 70%) by weight of the total amount of fluorinated carbon materials present in the cathode.

In various embodiments, fluorinated carbon derived from petroleum coke may have an average BET surface area of from, for example, about 120 $cm^2/g$ to about 450 $cm^2/g$, or about 180 $cm^2/g$ to about 250 $cm^2/g$. Fluorinated carbon derived from petroleum pitch typically has a slightly higher BET surface area of, for example, from about 250 $cm^2/g$ to about 750 $cm^2/g$, or about 350 $cm^2/g$ to about 650 $cm^2/g$. In this regard it is to be noted, however, that the surface area of the fluorinated carbon cathode material may fall within any of the noted ranges, or alternatively may fall outside any of the noted ranges, regardless of the source from which they were derived, without departing from the scope of the present disclosure.

The first fluorinated carbon cathode material described above (e.g., $CF_1$, derived for example from a coke source) may be obtained commercially as, for example, PC-10 $CF_1$ from Lodestar (New Jersey). The second fluorinated carbon cathode material described above (e.g., $CF_{0.6}$, also derived for example from a coke source) may be obtained commercially as, for example, PC-51 from Lodestar. The third fluorinated carbon cathode material described above (e.g., $CF_{0.9-1.1}$, derived for example from pitch) may be obtained commercially as, for example, P5000 from Advanced Research Chemical (Tulsa, Oklahoma). In this regard it is to be noted, however, that other materials may be used without departing from the scope of the present disclosure.

It should be understood that the cathode may contain one or more other cathode materials, such as copper manganese mixed oxides as described in for example U.S. Patent Application No. 12/614,667, published as U.S. Pub. No. 2010/0221616 (filed November 9, 2009). For instance, in various embodiments the cathode may include some amount of a copper manganese oxide cathode material represented by the formula $Cu_aMn_bO_c$ or $CuaMn_bO_c \cdot nH_2O$ (wherein "$nH_2O$" represents the structural and/or surface water present in the cathode material). In this cathode material, copper may have an oxidation state between about +1 and about +3, and manganese may have an oxidation state between about +2 and about +7. Additionally, a, b and c each independently have a value of greater than 0, and furthermore (i) the sum of a + b may be in the range of from about 1 to about 3, while (ii) c has a value that may be experimentally determined and that is consistent with the values of a, b and the oxidation states of copper and manganese, and in one or more embodiments is a value such that copper has an oxidation state of approximately +2 or higher. The copper manganese oxide material may be amorphous, or alternatively semi-crystalline, inform.

In this regard it is to be noted that, in one particular embodiment, the sum of the first, second and third fluorinated carbon materials account for about 10%, 20%, 30%, 40%, 50%, 60%, 70%, 80%, 90%, 95%, 99%, or even about 100%, of the cathode material present in the cathode of the non-aqueous electrochemical cell (based on the total weight of the cathode material present therein). In various alternative embodiments, wherein the concentration of the fluorinated carbon material is less than about 100%, the concentration of one or more additional cathode materials (e.g., copper manganese oxide) present in the cathode may be optimized for a given application or use, by means generally known in the art. In one particular embodiment, however, the cathode mixture of the present disclosure may include from about 60% to about 95%, by weight, fluorinated carbon, and in some instances may include from between about 65% to about 90%, or about 70% to about 85% by weight fluorinated carbon (i.e., the total concentration of the three different fluorinated carbon materials). Additionally, the cathode mixture may include from between about 5% to about 40%, by weight copper manganese oxide, and in some instances may include from about 10% to about 35% or about 15% to about 30% by weight copper manganese oxide. However, in this regard it is to be noted that such concentrations should not be viewed in a limiting sense. For example, in alternative embodiments, the copper manganese oxide may be the major component of the cathode material (rather than for example the fluorinated carbon).

In addition to the fluorinated carbon materials described herein, the other components of the non-aqueous electrochemical cell may be selected from among those generally known in the art. For example, according to various embodiments of the present disclosure, the cathode may also include a binder, for example, a natural or synthetic polymeric binder such as polyvinylidene fluoride (PVDF), polytetrafluoroethylene (PTFE), ultra-high molecular weight polyethylene (UHMWPE), styrene-butadiene rubber, cellulose, polyacrylate rubber and copolymers of acrylic acid or acrylate esters. The cathode may contain (by weight of cathode active materials, binders and conductive fillers (described below)), up to about 15% binders (e.g., from about 1% to about 15%) and more typically up to about 9% binders (e.g., from about 1% to about 9%).

In addition to the binder, the fluorinated carbon materials may be mixed with an electrically conductive additive or filler. Suitable additives include carbon black (e.g., Super P, from Timcal), natural and synthetic graphite, as well as their various derivatives (including graphene, graphite nanoplatlets, expanded graphite - such as KS4, from Timcal), carbon nanofibers and nanotubes, and non-graphitic forms of carbon, such as coke, charcoal or activated carbon. Various metals, particularly those in powdered form, may also be used as conductive fillers in the cathode and in some embodiments metals that are not oxidized at potentials above 3.0 V versus lithium are used. Examples of such metals include silver, gold, aluminum, titanium and mixtures thereof.

The cathode may contain (by weight of cathode active materials, binders and conductive fillers) up to about 15 wt% electrically conductive additives (e.g., from about 1 wt% to about 15 wt%). More typically, however, the cathode may contain up to about 10 wt% electrically conductive additives (e.g., from about 1 wt% to about 10 wt%). In this regard it is to be noted that a lower resistivity or high conductivity means that the cathode is capable of providing higher power at beginning-of-life, before the fluorinated carbon (CF) becomes conductive as a result of discharge.

In some embodiments, the cathode includes a polymer material that acts as both a binder and a conductive filler. Such materials may be conjugated polymers (i.e., a conjugated n-system polymer), such as, for example, polypyrrole, polythiophene, polyaniline and mixtures thereof. In such embodiments, the conductive polymer is typically mixed with the fluorinated carbon (CF) active material or applied thereto, in order to provide the minimum possible cathode resistivity.

It is also to be noted that among the various embodiments of the present disclosure are included embodiments wherein the cathode material is non-lithiated. Stated another way, the cathode material is prepared such that, at least initially (i.e., prior to use), the cathode material is essentially free of lithium or lithium ions therein (i.e., lithium or lithium ions are not intentionally added as a component of the cathode material during preparation). In one particular embodiment, the cathode consists essentially of fluorinated carbon and, optionally, a binder material and/or a conductive diluent (both as further detailed elsewhere herein). However, such cathode materials may be utilized in a non-aqueous electrochemical cell with a lithium (Li) anode, for primary (non-rechargeable) or secondary (rechargeable) batteries. As a result, in use, lithium or lithium ions may be present in such a cathode material. The presence of such lithium or lithium ions in use should therefore not be viewed in a limiting sense.

The non-aqueous electrochemical cell of the present disclosure additionally has an anode, which may include any anode material suitable for use in non-aqueous electrochemical cells. Typically, however, the anode comprises a metal selected from Group IA or Group IIA of the Periodic Table of the Elements, including for example lithium, magnesium, sodium, potassium, etc., and their alloys and intermetallic compounds, including for example Li-Mg, Li-Al, Li-Al-Mg, Li-Si, Li-B and Li-Si-B alloys and intermetallic compounds. The form of the anode may vary, but typically it is made as a thin foil of the anode metal, and a current collector having an extended tab or lead affixed to the anode foil. The anode capacity may be from about equal to that of the cathode capacity to about 35% greater than that of the cathode.

As previously noted, the non-aqueous electrochemical cell of the present disclosure further includes a non-aqueous, ionically conductive electrolyte, which serves as a path for migration of ions between the anode and the cathode electrodes during the electrochemical reactions of the cell. The electrolyte can be in either liquid state or solid state, or both. The electrochemical reaction at the electrodes involves conversions of ions in atomic or molecular forms that migrate from the anode to the cathode. Thus, non-aqueous electrolytes suitable for the present disclosure are substantially chemically inert to the anode and cathode materials. Furthermore, a suitable electrolyte in liquid state exhibits those physical properties that are beneficial for ionic transport (e.g., low viscosity, low surface tension, and/or good wettability).

The various components of the electrolyte may be selected from among those generally known in the art, which are suitable for use in combination with the cathode materials detailed elsewhere herein. Preferably, however, a suitable electrolyte for use in accordance with the present disclosure has an inorganic, ionically conductive salt dissolved in a non-aqueous solvent (or solvent system, when a mixture of solvents is used). More preferably, the electrolyte includes an ionizable alkali metal salt dissolved in an aprotic organic solvent or a mixture of solvents comprising a low viscosity solvent and a high permittivity solvent. Without being held to any particular theory, the inorganic, ionically conductive salt is believed to serve as the vehicle for migration of the anode ions to react with the cathode active material. Accordingly, the ion-forming alkali metal salt may be similar to the alkali metal comprising the anode.

In one particular embodiment of the present disclosure, the ionically conductive salt has the general formula $MM'F_6$ or $MM'F_4$, wherein M is an alkali metal that is the same as at least one of the metals in the anode and M' is an element selected from the group consisting of phosphorous, arsenic, antimony and boron. Salts suitable for obtaining the formula $M'F_6$ include, for example, hexafluorophosphate ($PF_6$), hexafluoroarsenate ($AsF_6$) and hexafluoroantimonate ($SbF_6$), while salts suitable for obtaining the formula $M'F_4$ include, for example, tetrafluoroborate ($BF_4$). Alternatively, the corresponding sodium or potassium salts may be used. Thus, for a lithium anode, the alkali metal salt of the electrolyte may optionally be selected from, for example, $LiPF_6$, $LiAsF_6$, $LiSbF_6$ and $LiBF_4$, as well as mixtures thereof. Other salts that are useful with a lithium anode include, for example, $LiClO_4$, $LiAlCl_4$, $LiGaCl_4$, $LiC(SO_2CF_3)_3$, $LiB(C_6H_4O_2)_2$, $LiN(SO_2CF_3)_2$, $LiN(SO_2C_2F_5)_2$, $LiB(C_2O_4)_2$ and $Li(CF_3SO_3)$, as well as mixtures thereof.

Low-viscosity solvents that may be suitable for use in accordance with the present disclosure in the non-aqueous electrochemical cell include, for example, various lactones, esters, carbonates, sulfonates, sulfites, nitriles, and ethers. More particularly, however, the solvent may be selected from, for example, dimethyl carbonate (DMC), diethyl carbonate, 1,2-dimethoxyethane (DME), tetrahydrofuran (THF), methyl acetate (MA), diglyme, triglyme, tetraglyme, ethyl methyl carbonate, vinylene carbonate, dioxolane, dioxane, dimethoxyethane and high permittivity solvents, including for example, cyclic carbonates, cyclic esters and cyclic amides (such as propylene carbonate (PC), ethylene carbonate (EC), acetonitrile, dimethyl sulfoxide, dimethyl formamide, dimethyl acetamide, gamma-butyrolactone (GBL), and N-methyl-pyrrolidinone (NMP)), as well as various mixtures or combinations thereof.

The type and composition of the solvent used in the electrolyte, and/or the type and concentration of a salt present therein, may be selected in order to optimize one or more physical and/or performance properties of the non-aqueous electrochemical cell of the present disclosure. For example, in one or more embodiments of the present disclosure, the concentration of the salt in the electrolyte may be in the range of from about 0.3 M to about 2.5 M, or from about 0.4 M to about 2 M, or from about 0.5 M to about 1.6 M. In these or other embodiments of the present disclosure, wherein a mixed solvent system is employed, the ratio (volume) may range for example from between about 1:9 and about 9:1 of a first solvent (e.g., a carbonate solvent, such as propylene carbonate) and a second solvent (e.g., a substituted alkane solvent, such as 1,2-dimethoxyethane); that is, the solvent system may comprise from about 10 volume% to about 90 volume%, or from about 20 volume% to about 80 volume%, or from about 30 volume% to about 70 volume%, of a first solvent, all or substantially all of the balance of the solvent system being the second solvent. In one embodiment, however, the anode is lithium metal and the preferred electrolyte is about 1 M to about 1.8 M, or about 1.2 M to about 1.6 M, $LiBF_4$ in a mixed PC/DME solvent system (the concentration of the solvent system being from about 10 volume% PC/90 volume% DME and about 70 volume% PC/30 volume% DME). The amount by weight of electrolyte included in the cell may be from about 40% to about 120%, or even from 50% to about 100%, of the amount of cathode active materials (e.g., fluorinated carbon materials) added to the cell.

The non-aqueous electrochemical cell of the present disclosure additionally includes a suitable separator material, which is selected to separate the cathode/ cathode material from the Group IA or IIA anode / anode material, in order to prevent internal short circuit conditions. The separator is typically selected from materials known in the art to be electrically insulating (and sometimes ionically conductive), chemically non-reactive with the anode and cathode active materials, and both chemically non-reactive with and insoluble in the electrolyte. In addition, the separator material is selected such that it has a degree of porosity sufficient to allow the electrolyte to flow through it during the electrochemical reaction of the cell. The cell may be fabricated such that the separator is wound between the anode and the cathode or heat-sealed around one or both of the anode and cathode. The separator material may be selected to have a thickness ranging from, for example, about 15 $\mu$m to about 75 $\mu$m, or from about 10 $\mu$m to about 50 $\mu$m. In some embodiments, the separator is a two or more layered laminate material with the total thickness of the separator ranging from the amounts listed above.

Accordingly, suitable separator materials typically include, or may be selected from, porous or nonporous polymer membranes, such as for example: polypropylene, polyethylene, polyamide (e.g., nylon), polysulfone, polyvinyl chloride (PVC), and similar materials, and combinations thereof (e.g., a trilayer membrane, such as a trilayer membrane of polypropylene/ polyethylene/ polypropylene), as well as fabrics woven from fluoropolymeric fibers, including for example polyvinylidine fluoride (PVDF), polyvinylidine fluoride-cohydrofluorpropylene (PVDF-HFP), tetrafluoroethylene-ethylene copolymer (PETFE), chlorotrifluoroethylene-ethylene copolymer, and combinations thereof. Fabrics woven from these fluoropolymeric fibers can be used either alone or laminated into a microporous film (e.g., a fluoropolymeric microporous film).

The form or configuration of the non-aqueous electrochemical cell of the present disclosure may generally be selected from those known in the art. The cell may be formed in various configurations including, for example, a jelly-roll, Z-fold anode with parallel-plate cathode, or parallel multi-plate (for both anode and cathode) configuration. The cathode may be overlaid with the anode with one or two layers of separator interspersed between them. The anode capacity is typically within a range of from about equal to that of the cathode capacity, to about 15%, about 25%, or even about 35% greater than the cathode capacity.

In one particular embodiment, however, the form or configuration of the non-aqueous electrochemical cell is a case-negative design, wherein the cathode/ anode/ separator electrolyte components are enclosed in a conductive metal casing such that the casing is connected to the anode current collector in a case-negative configuration, although case-neutral design is also suitable. Preferred materials for the casing include titanium, stainless steel, nickel and aluminum. The casing header includes a metallic lid having a sufficient number of openings to accommodate the glass-to-metal seal/ terminal pin feed through for the cathode electrode. The anode electrode is preferably connected to the case. An additional opening is provided for electrolyte filling. The casing header comprises elements having compatibility with the other components of the non-aqueous electrochemical cell and may be resistant to corrosion. The cell is thereafter filled with the electrolyte solution described hereinabove, the weight of the electrolyte typically being about 40% to about 120%, or about 60% to about 110%, of the weight of the fluorinated carbon, and then hermetically sealed, such as by welding a stainless steel plug over the fill hole. In this regard it is to be noted, however, that the cell of the present disclosure may alternatively be constructed in a case-positive design. Accordingly, the description provided herein should not be viewed in a limiting sense. The shape of the casing is not critical and may be button, cylindrical or rectangular or otherwise.

In this regard it is to be further noted that other components of the non-aqueous electrochemical cell (e.g., current collectors, etc.) may be selected from among those components generally known in the art, without departing from the scope of the present disclosure. The current collector may be construction of aluminum, titanium, stainless steel or carbon steel and may be configured as a foil, chemically-etched screen, expanded metal, punched screen or perforated foil. The current collector may be coated with carbon, noble metals or a carbide-type coating. The coating provides a stable resistance at the electrochemical interface of the current collector with the active fluorinated carbon materials. The dry fluorinated carbon may also be extruded or coated onto a non-binding substrate to form a free-standing sheet that is subsequently punched to size and applied to the current collector by pressing. Alternatively, the cathode mixture may be in the form of a slurry or paste and applied to a foil or perforated foil, and then dried. Regardless of the method of preparation, the cathode may be compressed or calendered to a minimum thickness without detrimentally affecting the cell's power capability. The total amount of cathode material applied to the current collector may be from about 7 mg/cm$^2$ to about 150 mg/cm$^2$ or from about 7 mg/cm$^2$ to about 80 mg/cm$^2$

Once the cathode material has been prepared by mixing the active cathode components (e.g., fluorinated carbon), binder and electrically conductive additives, the cathode material may be deposited on the cathode current collector in the form of a single, substantially homogenous mixture (e.g., wherein the individual fluorinated carbon cathode materials are blended, i.e., mixed such that the materials are evenly distributed throughout one another and then this mixture is deposited in the form of a single layer on the cathode current collector). Alternatively, however, the individual

EP 2 507 857 B1

fluorinated carbon materials may be deposited in the form of layers on: (i) the same side of the current collector (e.g., fluorinated carbon derived from coke having the formula $CF_x$, with x being between greater than about 0.9 and about 1.2, is deposited on the surface of the current collector as a first layer, then fluorinated carbon derived from petroleum pitch having the formula $CF_z$, with z being between about 0.8 and about 1.2, is deposited on the first layer as a second layer, and fluorinated carbon derived from coke having the formula $CF_y$, with y being between about 0.4 and less than about 0.9 is deposited on the second layer as a third layer, or any combination of these); or (ii) opposite sides of the current collector (e.g., as in tertiary systems in which two layers are deposited on one side and a single layer on the other or when two components are blended and the blended materials are deposited as a single layer on one side and the third material is deposited on the other side of the current collector). In these and various other embodiments, the loading of cathode material on a surface of the current collector is typically from about 5 to about 35 mg/cm$^2$ (per side), or from about 6 to about 30 mg/cm$^2$ and suitably may be from about 7 to about 21 mg/cm$^2$

In one exemplary embodiment, the cathode is prepared by contacting a dry mixture of from about 82 to about 94 weight percent of the fluorinated carbon active material, up to about 15 weight percent of a conductive diluent, and about 2 to about 9 weight percent of a polymeric binder, onto a current collector. The current collector is made of aluminum, titanium, stainless steel or carbon and is in the form of a foil, chemically-etched screen, expanded metal, punched screen, or perforated foil. The current collector is preferably coated with carbon, a noble metal or a carbide-type coating. This provides a stable resistance at the electrochemical interface of the current collector with the fluorinated carbon (CF). The dry CF mixture can also be extruded or coated onto a non-binding substrate to form a free-standing sheet that is subsequently punched to size and applied to the current collector by pressing. Alternatively, the cathode mixture in the form of a slurry or paste is applied to a foil or perforated foil, and then the cathode is dried. Regardless of the preparation method, the cathode is compressed or calendered to the minimum thickness without detrimentally affecting the power capability of the cell. The amount of cathode material is typically from about 7 mg/cm$^2$ to about 150 mg/cm$^2$

It is to be noted that, unless otherwise stated, the various concentrations, concentration ranges, percent inclusions, ratios and the like recited herein, are provided for illustration purposes only and therefore should not be viewed in a limiting sense. It is to be additionally noted that all various combinations and permutations of compositions, concentrations, percent inclusions ratios, components and the like are intended to be within the scope of and supported by the present disclosure.

## 2. Cathode Material Preparation

The fluorinated carbon materials may be prepared by methods generally known by those skilled in the art, such as by continuously contacting the source of carbon (e.g., coke, such as petroleum coke, activated beaded petroleum pitch, bead-shaped activated carbon (BAC), activated carbon, charcoal, and graphitic materials) with a fluorine-containing gas (e.g., fluorine gas diluted in an inert carrier gas, such a nitrogen or argon or a mixtures thereof) in a reaction vessel. Spent fluorine-containing gas may be continuously removed from the reaction vessel. Generally, the fluorination reaction may occur at temperatures ranging from about room temperature to about 550°C, but typically occurs at a temperature in the range of from about 300°C to about 450°C. Additionally, the reaction may occur at atmospheric pressure, or alternatively may occur at elevated pressures (i.e., pressure above atmospheric pressure). The carbon particles may be contacted with fluorine-containing gas until the desired degree of fluorination is achieved (as determined by means known in the art); however, suitable reaction times may be for example from about 1 hour to about 40 hours, or about 4 to about 35 hours, or from about 6 to about 30 hours, depending on the reaction system variables (such as for example the reaction components, fluorine-containing gas concentration and flow rate, desired degree of fluorination, operating temperatures, pressures and the like). Although the amount of fluorine used in the process, and/or concentration in the gas, may vary, it is to be noted that the amount of fluorine is preferably controlled to limit excess fluorine, since excess fluorine may result in the formation of gaseous products and the corresponding destruction of the carbon solid.

Referring now to Figure 1, in one particular embodiment, bead-shaped activated carbon (BAC) is used to prepare the fluorinated carbon cathode material. BAC is a highly spherical activated carbon with petroleum pitch as its raw material. In addition to intrinsically having the absorption performance of activated carbon, BAC has various features, including for example: small particle size, high-fill capability, high flowability, high purity, low dust content, high strength, high wear resistance, and narrow particle size distribution. Additionally, BAC delivers a stable quality product through an integrated production from the raw material pitch. Further, BAC has superior characteristics derived from the usage of high grade pitch, bead formation that does not use a binder, and uniform infusibilization and activation while flowing. A general BAC production process involves the steps of:

Raw oil → Pitch synthesis →Bead formation

↓

Infusibilization → Activation

↓

Sieving (optional) → Product

As stated above, the carbon materials may be fluorinated until the desired average degree of fluorination is achieved for the three distinct types or forms of fluorinated carbon is achieved (i.e., until x, y and/or z in the formulas provided above reach the desired average value). Broadly speaking, however, fluorination may be carried out until a suitably fluorinated carbon material is obtained. Such material may be generally characterized by a molar ratio of carbon to fluorine of about 1:0.1 to about 1:1.9, or about 1:0.4 to about 1:1.2; stated differently, suitable fluorinated carbons may be generally characterized by the formulas $CF_q$, wherein q is from about 0.1 to about 1.9, or from about 0.4 to about 1.2 (the formula $CF_q$ thus broadly encompassing the three fluorinated carbon materials represented by the formulas $CF_x$, $CF_y$, and $CF_z$).

The particle sizes of the fluorinated carbon utilized in the cathode may vary without departing from the scope of the present disclosure. For instance, the average particle size (e.g., the nominal diameter) of the fluorinated carbon (e.g., $CF_z$) derived from petroleum pitch (e.g., beaded petroleum pitch) may be from about 100 $\mu$m to about 1200 $\mu$m, or from about 150 $\mu$m to about 1000 $\mu$m. In certain preferred embodiments, however, the average size of such fluorinated carbon is from about 500 $\mu$m to about 700 $\mu$m. In contrast, the average particle size (e.g., the nominal diameter) of the fluorinated carbon (e.g., $CF_x$) derived from petroleum coke may be from about 0.1 $\mu$m to about 300 $\mu$m, and is typically from about 0.5 $\mu$m to about 100 $\mu$m.

In this regard it is to be noted that the above-recited particle sizes may be achieved directly, or by particle size reduction (using means generally known in the art). For example, once prepared, the resulting fluorinated carbon material may optionally be reduced in size by milling or grinding. Suitably material with a particle size from about 0.1 to about 300 $\mu$m (e.g., from about 0.1 $\mu$m to about 200 $\mu$m or from about 0.5 $\mu$m to about 50 $\mu$m) may therefore optionally be obtained (either directly or by particle size reduction) for use in the cathode.

Particle sizes within the recited ranges have been found to lead to better dispersion of the particulates and a higher capacity output due to the increased surface area. Particle size reduction may suitably be achieved by milling (such as ball milling or jet milling) a liquid suspension (i.e., slurry) of the particles. The slurry suitably may contain from about 30% to about 80% by weight solids (e.g., about 40% to about 70% or from about 45% to about 60%). The viscosity of the slurry may be from about 400 cP to about 2500 cP and typically from about 600 cP to about 1600 cP.

## 3. Electrochemical Cell Uses and Performance Properties

Without being held to any particular theory, it is to be noted that the combination of three (or more) distinct or different fluorinated carbon cathode materials is believed to be particularly advantageous, at least in part because the combination of these materials yields a material having surprisingly higher power and/or rate capability than expected, based on the individual power and rate capacities of cathodes containing only one of the distinct fluorinated carbon materials. Stated another way, as further illustrated below, the power of a non-aqueous electrochemical cell comprising a hybrid cathode (or cathode material) as detailed herein has been observed to be higher than the sum of the individual power capabilities of similarly prepared cells that comprise only one of the individual fluorinated carbon cathode materials alone.

The individual fluorinated carbons included in the cathodes of the present disclosure may additionally or alternatively be characterized by their discharge profile, each of which contributes to the overall discharge profile of the hybrid cell. Generally speaking, therefore, the present disclosure is additionally or alternatively directed to a non-aqueous electrochemical cell comprising, in relevant part, a first fluorinated carbon cathode material, a second fluorinated carbon cathode material, and a third fluorinated carbon cathode material, the first, second and third fluorinated carbon cathode materials each exhibiting a discharge voltage at or above 2.5 volts that is distinct from the other two.

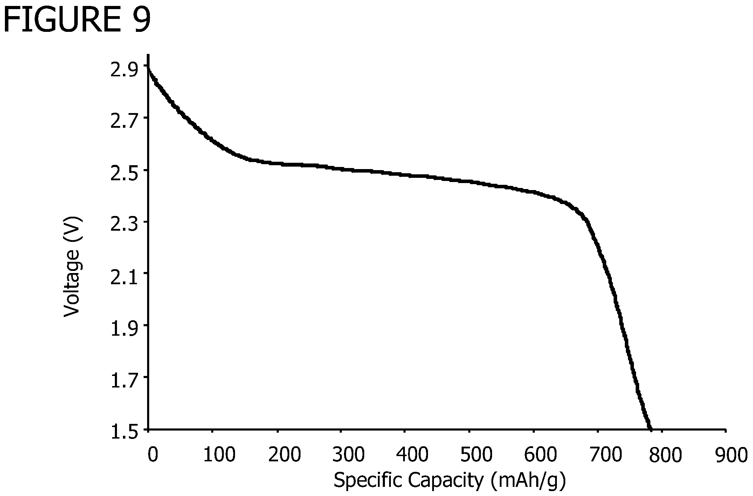

In one particular embodiment of the present disclosure, the first fluorinated carbon may have an initial discharge voltage of from about 2.3 V to about 2.7 V, and more particularly about 2.4 V to about 2.6 V, and a discharge capacity of from about 800 mAh/g to about 870 mAh/g when the first fluorinated carbon cathode material is discharged to about 1.5 V (See, e.g., Fig. 8). The second fluorinated carbon cathode material may have an initial discharge voltage of from about 2.7 V to about 3.1 V, and more particularly about 2.8 V to about 3.0 V, and a discharge capacity of from about 680 mAh/g to about 800 mAh/g when the second fluorinated carbon cathode material is discharged to about 1.5 V (See, e.g., Fig. 9). The second fluorinated carbon cathode material may also or optionally be characterized by a sloping discharge voltage of at least about 0.1 V per 100 mAh/g from about 2.9 V to about 2.6 V, or at least about 0.2 V per 100 mAh/g from about 2.9 V to about 2.6 V. The third fluorinated carbon cathode material may have an initial discharge voltage from about 2.6 V to about 3.0 V, and more particularly about 2.7 V to about 2.9 V, and a discharge capacity of from about 825 mAh/g to about 875 mAh/g when the third fluorinated carbon cathode material is discharged to about 1.5 V (See, e.g., Fig. 10). The third fluorinated carbon cathode material may also or optionally have a sloping discharge voltage of at least about 0.03 V per 100 mAh/g from about 2.8 V to about 2.6 V, or of at least about 0.05 V per 100 mAh/g from about 2.8 V to about 2.6 V.

In this regard it is to be noted that the discharge profiles, or the shape or slope of the discharge curve, for one or more of the fluorinated carbon cathode materials may be changed or altered as a function of, for example, discharge rate, and therefore should not be viewed in a limiting sense.

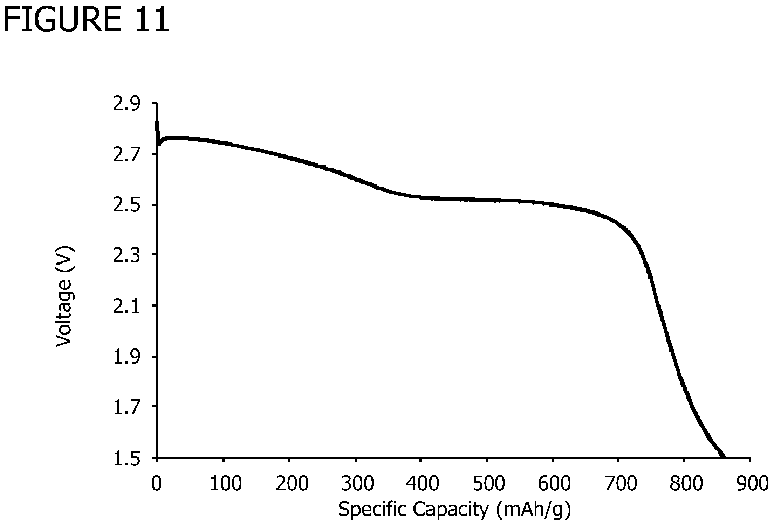

Suitably the first, second and third fluorinated carbon cathode materials may be combined to produce a hybrid cathode with enhanced power and rate capability. Each individual cathode material contributes to the discharge voltage profile of the hybrid cathode (as illustrated in Fig. 11). In suitable embodiments, the hybrid cathode has an initial discharge voltage of from about 2.6 V to about 3.0 V, and more particularly from about 2.7 V to about 2.9 V, and a discharge capacity of from about 825 mAh/g to about 875 mAh/g when the cathode is discharged to about 1.5 V (See, e.g., Fig. 11). Referring to Figures 8-11, and Figure 10 in particular, it can be seen that the pitch-derived fluorinated carbon component (or the third fluorinated carbon component, $CF_z$), which may be for example P5000, discharges first until about 2.5 V. After this, the coke-derived components (or the first and second fluorinated carbon components, $CF_x$ and $CF_y$, respectively) are the primary contributors to the discharge profile. Finally, approaching about 1.5 V, all three materials contribute to the discharge profile.

It is to be noted that the precise composition of the fluorinated carbon cathode materials may be selected to optimize it for a desired performance property, and/or the desired end-use application of the non-aqueous electrochemical cell containing it. The cathode material of the present disclosure is generally suitable for use in essentially any non-aqueous electrochemical cell known in the art, particularly those designed to deliver high pulse currents (wherein "high" pulse currents are typically 0.5C or greater, where C is the rated capacity in Ampere-hours).

In this regard it is to be further noted that, as used herein, the term "pulse" refers to a short burst of electrical current of significantly greater amplitude than that of a pre-pulse current immediately prior to the pulse. A "pulse train" includes at least one pulse of electrical current. If the pulse train includes more than one pulse, they are delivered in relatively short succession with open circuit rest between the pulses. An exemplary pulse train may include four 10-second pulses with 15 seconds of rest between each pulse. Typically, a 10-second pulse is suitable for medical implantable applications. However, it could be significantly shorter or longer depending on the specific cell design and chemistry.

Additionally, such a non-aqueous electrochemical cell of the present disclosure, which contains the noted cathode material, is generally suitable for a number of know applications or devices, including for example: medical devices (such as pace makers, defibrillators, cardiac monitors, drug delivery systems, pain management systems, etc.), portable military electronic devices (such as radios, transponders, weapon sights, etc.), marine devices (such as sonobuoys, torpedoes, etc.), aerospace devices (such as deep space probes, command destruct systems, back-up power systems, etc.), military and commercial sensors, remote data collection systems, among other known applications and devices. Such a cathode material may be particularly advantageous for use in medium rate and/or high rate electrochemical cells, which in turn may be used in such devices as neurostimulators, pacemakers, implantable cardioverter defibrillators, and congestive heart failure devices (i.e., devices that use power sources that provide milliampere level electrical pulses, in the case of medium rate devices, and ampere level electrical pulses, in the case of high rate devices, to control or treat pain, muscle movement, neurological disorders, bradycardia, tachycardia and cardiac resynchronization therapy).

In one particular embodiment, the non-aqueous electrochemical cell of the present disclosure may be configured as a reserve battery or cell, whereby the non-aqueous electrolyte is maintained separately from the electrodes, increasing the useful storage period of the battery over a wide temperature range. When needed, the non-aqueous electrolyte and electrodes may be automatically brought into contact, allowing the battery to function in a normal manner.

The cathode materials of the present disclosure, and the non-aqueous electrochemical cells comprising them, may additionally possess one or more other performance properties that are similar to, if not improved or enhanced as compared to, other materials and cells generally known in the art. For example, in various embodiments non-aqueous electrochemical cells or batteries that include a cathode comprising mixed CF cathode materials have been observed to exhibit a power and/or rate that is substantially similar to, if not greater than, other high energy cathodes currently in use, such as those that contain a single source of CF. In other various embodiments, however, a non-aqueous electrochemical cell comprising the cathode material of the present disclosure may exhibit improved or enhanced specific energy, energy density or capacity as compared for example to conventional non-aqueous electrochemical cells that use cathode materials that do not include three or more fluorinated carbon (CF) cathode materials. Additionally, or alternatively, the non-aqueous electrochemical cells of the present disclosure may advantageously generate about 5%, about 10%, or even about 15% less heat when in use, as compared for example to similarly configured or prepared non-aqueous electrochemical cells that comprise a conventional fluorinated carbon cathode material (as further detailed in, for example, Example 5 herein).

The following non-limiting examples are provided to further illustrate the various details and embodiments of the present disclosure.

## EXAMPLES

### Example 1: Physical and Chemical Characterization of Coke-Derived Fluorinated Carbon (CF$_1$) and Pitch-Derived Fluorinated Carbon (CF$_1$)

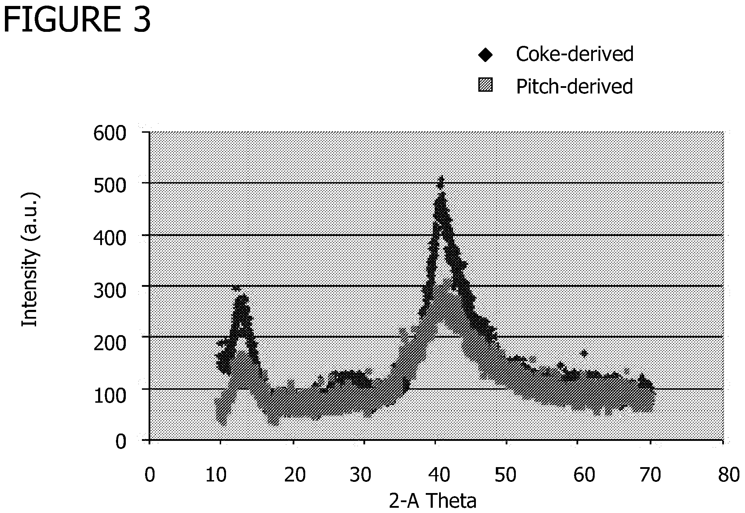

X-ray diffraction patterns of coke-derived fluorinated carbon (i.e., CF$_x$, which was commercially marketed as CF$_1$ but was analytically determined to be closer to CF$_{0.9}$, as given in Table 2, below), and pitch-derived fluorinated carbon (i.e., CF$_z$, which in this case was CF$_1$, as given in Table 2, below) were determined to characterize the performance and physical structure of the CF materials (Fig. 3). Figure 3 illustrates that there is little difference in the XRD signature between these two CF materials.

The crystal size of the materials were calculated by the following equation:

$$L_c = (K \lambda)/(L \cos \theta),$$

wherein L$_c$ is the crystal size, K is an instrument constant (typically 1), $\lambda$ is the wavelength of the X-ray (1.54 Å), L is the full width half maxima (FWHM) and $\theta$ is the diffraction angle. The crystal size (L$_c$) of the coke-derived fluorinated carbon material was 2.99 nm, while the pitch-derived carbon had a slightly larger crystal size of 4.5 nm.

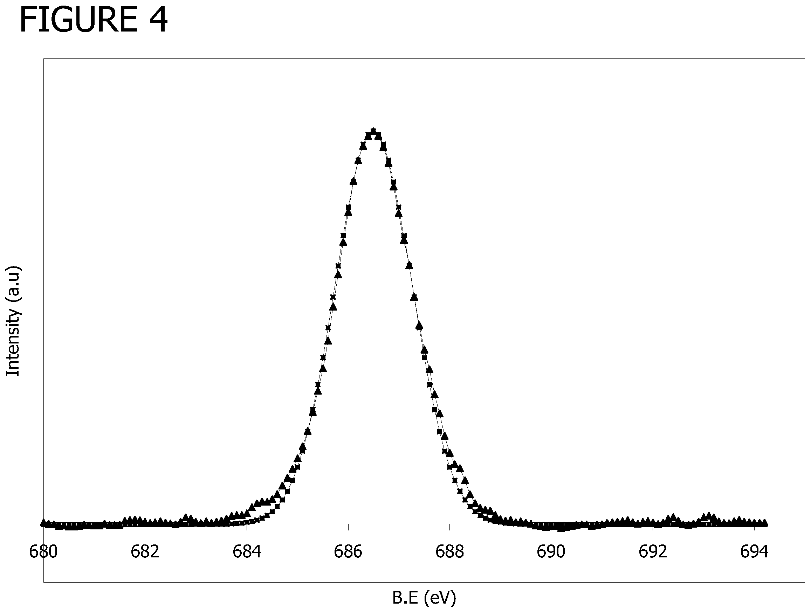

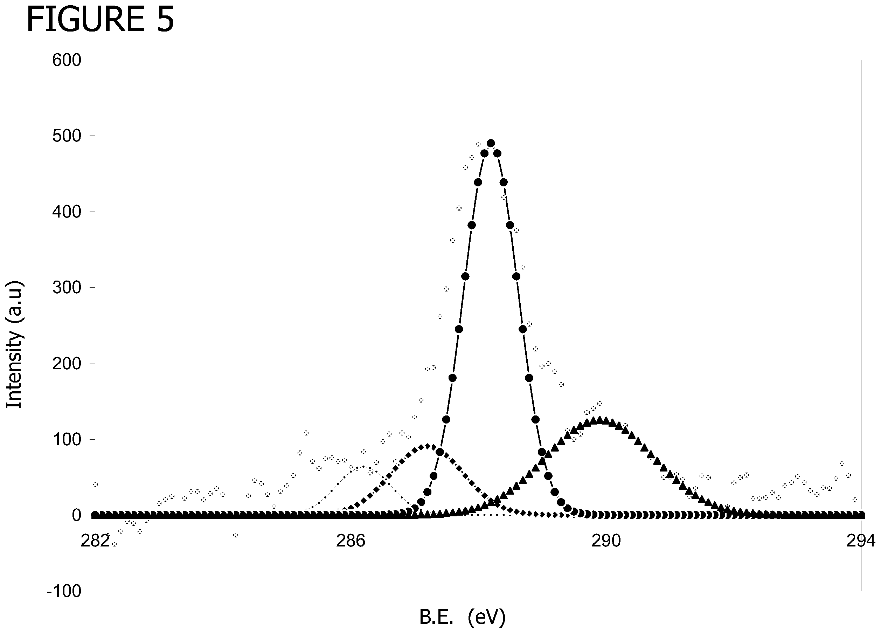

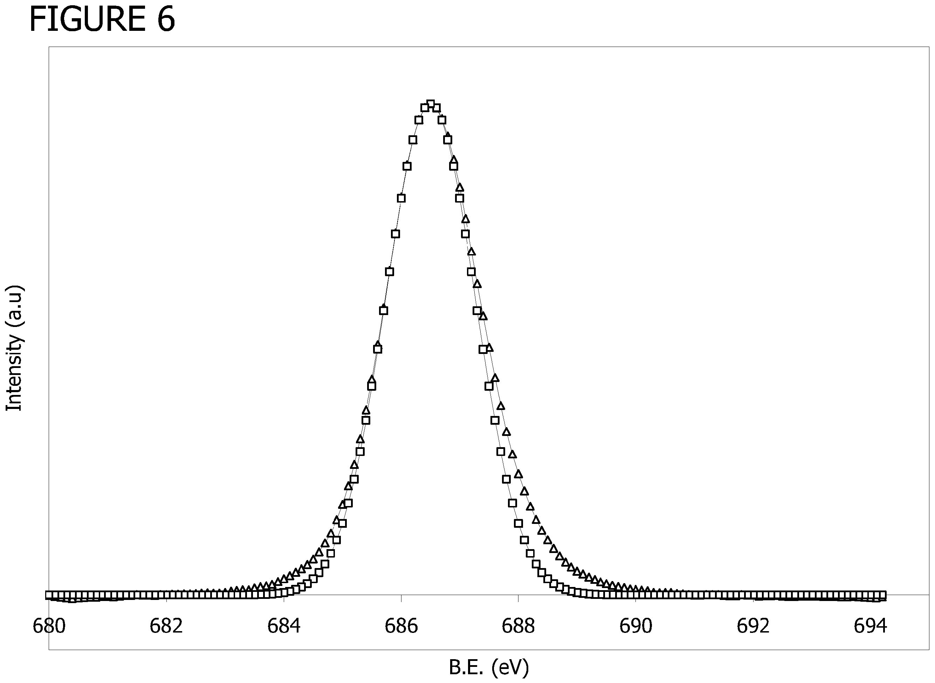

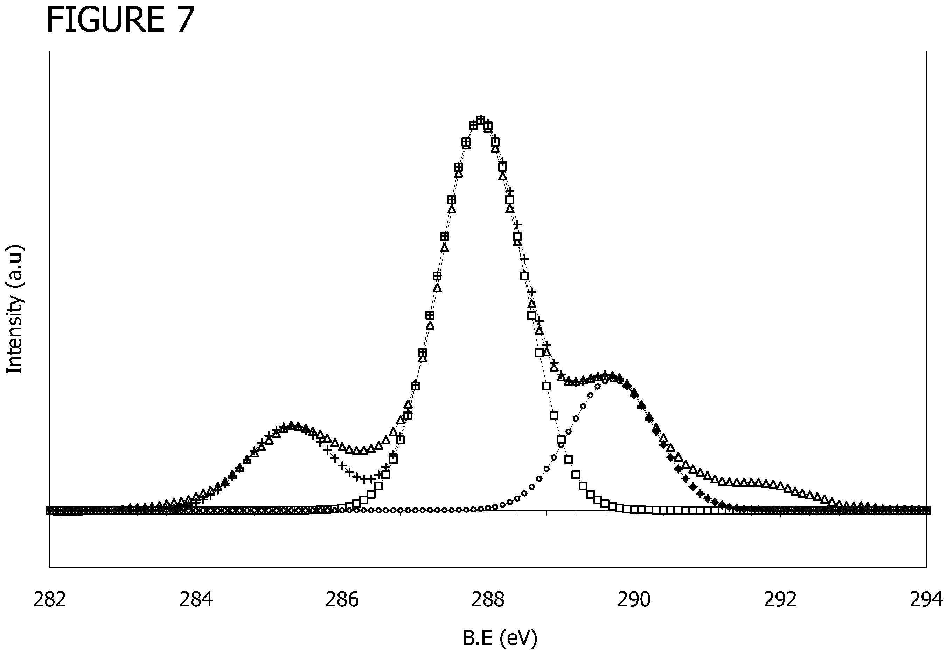

The surface chemical nature of the materials was studied using X-ray Photon Spectroscopy (XPS). The XPS survey (Figs. 4-7) scan shows the carbon and fluorine elements on the surface of the materials. Further detailed scans of carbon and fluorine and their peaks are shown in Figures 4-7.

The fluorine peak had only one major peak that appeared at 688.3 eV in both materials. This indicates that all fluorine in the materials is covalently bonded to carbon and forms a C-F bond. The detailed analysis of carbon is shown in Table 1, below, with the percentages of each type of bond for the material shown in parentheses. The petroleum pitch-derived material had two peaks at 288.7 eV and 290.6 eV which represents C-F and C-F$_2$ bonds, respectively. It is believed that the C-F$_2$ bond probably occurs at edges of the CF materials.

In the case of the fluorinated carbon coke material, the detailed carbon analysis showed several peaks at 289 eV (C-F), 290.3 eV (C-F$_2$), 288.6 eV (-C$_{10}$F$_8$-)$_n$ and 287.3 eV (-C4F-)$_n$. The two additional peaks at 288.6 eV and 287.3 eV represent lower levels of fluorination. The data indicates that the pitch-derived fluorinated carbon is mostly CF$_1$, whereas the coke-derived fluorinated carbon has a small percentage of lower fluorinated carbon mixed with CF$_1$. Accordingly, the pitch-derived material is thought to have a more desirable structure made mostly of carbon monofluoride which may result in the 300 mV higher initial discharge voltage.

**Table 1**

|  | C1s (eV) | F1s (eV) | C-F bond type |
|---|---|---|---|
| Pitch-Derived Fluorinated Carbon | 288.7 (64.4%) (C$_6$F$_6$)<br>290.6 (21.5%) (-CF$_2$CF$_2$-)$_n$ | 688.3 | Covalent |
| Coke-Derived Fluorinated Carbon | 289 (56.9%) (C$_6$F$_6$)<br>290.6 (22%) (-CF$_2$CF$_2$-)$_n$<br>288.3 (8.7%) (-C$_{10}$F$_8$-)$_n$<br>287.3 (9.4%) (C$_4$F) | 688.3 | Covalent |

Table 1: X-ray photon spectroscopy data detailing the carbon and fluorine peaks of pitch-derived fluorinated carbon and coke-derived fluorinated carbon.

The physical characteristics of pitch-derived fluorinated carbon (CF$_1$) and coke-derived fluorinated carbon (CF$_1$) are shown in Table2. As shown in Table 2, the fluorine concentration in the pitch-derived material is slightly higher than the coke-derived material. The pitch-derived material also has a particle size about 40 times larger than the coke-derived material (before particle size reduction) and had a surface area about 50% higher. The larger surface area may be explained by the smaller crystal size of the pitch-derived fluorinated carbon cathode material which results in more internal pores. A scanning electron microscope image of the pitch-derived material (Fig. 2) demonstrates that the surface of the particles is rough which would lead to higher surface area.

**Table 2**

| Material | F1s (atomic%) | C1s (atomic%) | Free Fluorine (%) | Type of CF | Particle size ($\mu$m) | Surface area ($m^2/g$) |
|---|---|---|---|---|---|---|
| Pitch-Derived Fluorinated Carbon | 60.67 | 37.03 | 0.03 | $CF_{1.03}$ | 220 | 461.9 |
| Coke-Derived Fluorinated Carbon | 58.61 | 41.39 | N/A | $CF_{0.9}$ | ~5-10 | 203.5 |

Table 2: Physical Properties of pitch-derived fluorinated carbon and coke-derived fluorinated carbon.

**Example 2: Determination of the Discharge Profile (50 J pulse) of a Prior Art Cell and a Cell Containing a Hybrid Cathode of the Present Disclosure**

Two 2.5 Ah Li/CF cells were constructed in a sealed aluminum bag. One cell included a hybrid cathode containing a mixture of three CF materials: 40 wt% coke-derived fluorinated carbon of formula $CF_1$, 10 wt% coke-derived fluorinated carbon of formula $CF_{0.6}$, and 50 wt% pitch-derived fluorinated carbon of formula $CF_1$. The second cell was a prior art Li/CF cell. The hybrid cathode also included carbon (KS-4 graphite, 6 wt% of the cathode, and Super P carbon black, 4 wt% of the cathode, both from TIMCAL) as an electrically conductive filler and polyvinylidine fluoride (PVDF) as a binder. The materials were mixed and spread onto a carbon coated aluminum current collector. About five pairs of cathode separator and anode were stacked and formed the bag cell.

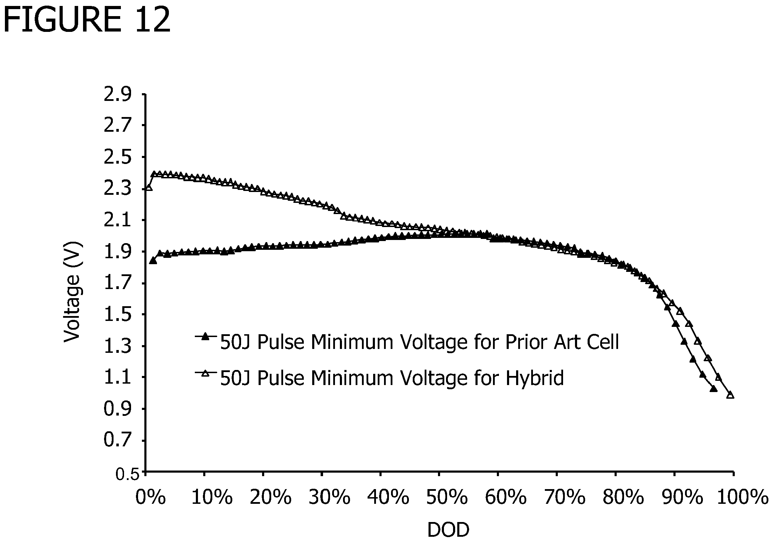

The testing protocol consisted of 50 J pulses; that is, 50 J pulses were applied to both cells (Fig. 12). The pulse train applied to the cells included four pulses (50 J) of electrical current. The pulses were delivered in short successions with open circuit rest of 15 seconds between pulses. There was an open circuit rest of 4 hours between two successive trains.

As shown in Figure 12, the cell containing the hybrid cathode had a higher pulse minimum voltage than the prior art cell, potentially due to the inclusion of the pitch-derived fluorinated carbon (see Example 3 below). More specifically, as illustrated in Figure 12, at the beginning of life, the hybrid cathode that contains P5000 has a 500 mV higher pulse minimum voltage than the prior art cathode material. This allows the hybrid cathode to deliver more electrical energy under high-power discharge protocols.

It should be noted that the x-axis of Figures 12-14 described as "DOD" is the depth-of-discharge of the cell, which is the ratio of delivered capacity to theoretical capacity (times 100).

**Example 3: Determination of the Discharge Profile (50 J pulse) of a Cell Containing a Pitch-Derived Fluorinated Carbon Cathode**

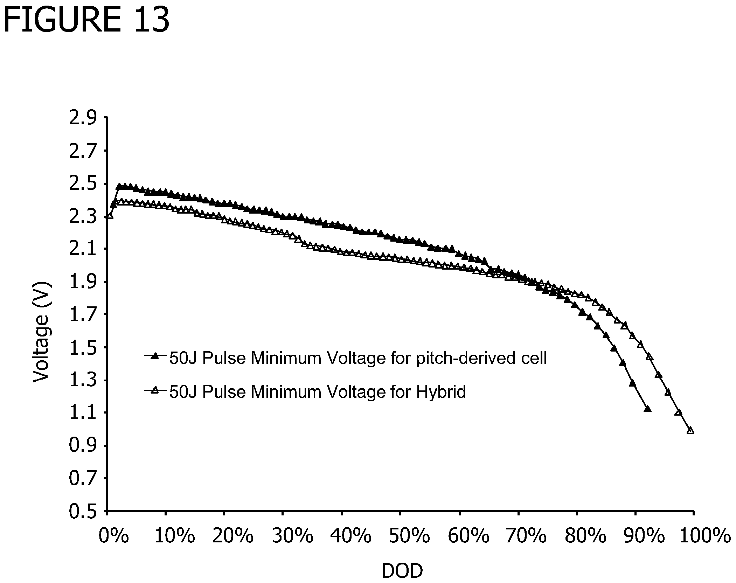

For purposes of comparison to Example 2, a cell with a pitch-derived fluorinated cathode (CF, or P5000) was fabricated according to the process of Example 2. The cell was subjected to the same 50J pulse protocol as Example 2 (Figure 13). As can be seen from Figure 13, the beginning-of-life pulse minimum voltage was as high as about 2.5 V. Figure 13 also shows the profile of the cell containing the hybrid cell of Example 2 which has a minimum voltage as high as 2.4 V.

**Example 4: Determination of the Discharge Profile (80 J pulse) of a Cell Containing a Hybrid Cathode of the Present Disclosure and a Cell Containing a Pitch-Derived Fluorinated Carbon Cathode**

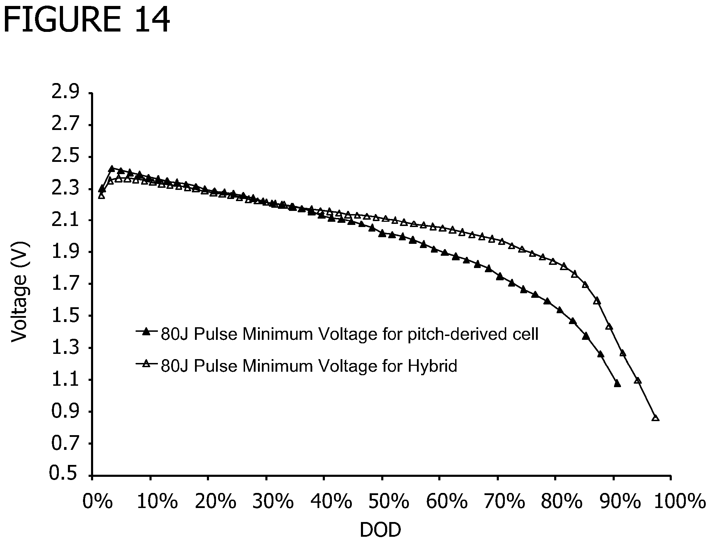

A cell containing a hybrid cathode with the same composition of fluorinated carbon components as the hybrid cathode of Example 2 and a cell having a pitch-derived fluorinated carbon cathode ($CF_1$ or P5000) were subjected to an 80 J discharge protocol, similar to that of Example 2 (Figure 14). The beginning-of-life pulse minimum voltage of the cell containing the hybrid cathode was as high as about 2.3 V, similar to that of the cell containing a pitch-derived fluorinated carbon (2.4 V).

**Example 5: Comparison of the Heat Generated by a Cell Containing a Coke-Derived Fluorinated Carbon Cathode and a Cell Containing a Pitch-Derived Fluorinated Carbon Cathode**

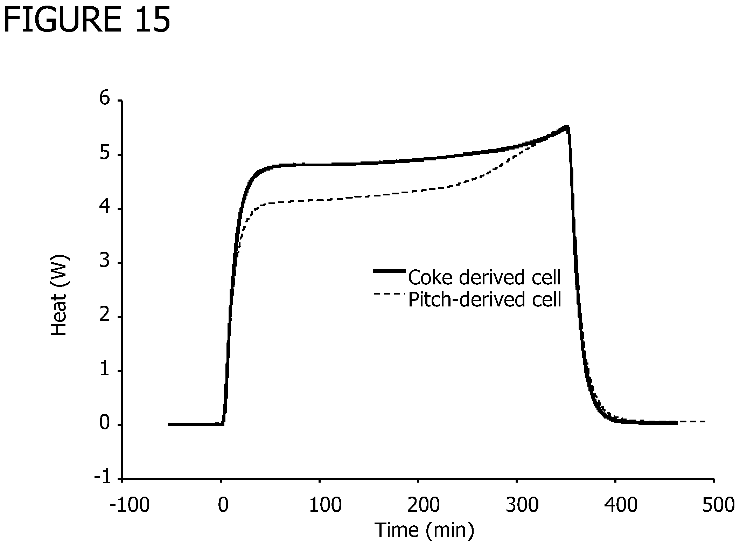

The heat generated during steady state discharge at 20°C of a D-sized cell containing a coke-derived fluorinated

carbon cathode (CF$_1$) and a D-sized cell having a pitch-derived fluorinated carbon cathode (P5000) were determined (Figure 15). Heat generation was measured in a millicalorimeter (Calarus Corp., Tempe, AZ). The tests demonstrate that the coke-derived material generated approximately 10% less heat than that of the pitch-derived material.

When introducing elements of the present disclosure or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

As various changes could be made in the above-described embodiments (e.g., cathode material compositions, non-aqueous electrochemical cell components and configurations, etc.) without departing from the scope of the disclosure, it is intended that all matter contained in the above description and shown in the accompanying figures shall be interpreted as illustrative and not in a limiting sense.

**Claims**

1. A non-aqueous electrochemical cell comprising:

   an anode;
   a hybrid cathode comprising a first fluorinated carbon cathode material,
   a second fluorinated carbon cathode material, and a third fluorinated carbon cathode material, wherein (a) the first or third fluorinated carbon cathode material has an average degree of fluorination that is distinct from the second fluorinated carbon cathode material, and (b) the first fluorinated carbon cathode material is derived from petroleum coke, while the third fluorinated carbon cathode material is derived from petroleum pitch;
   a separator disposed between the anode and the cathode; and,
   a non-aqueous electrolyte which is in fluid communication with the anode, the cathode and the separator.

2. The non-aqueous electrochemical cell of claim 1, wherein the first fluorinated carbon cathode material has the formula CF$_x$, the second fluorinated carbon cathode material has the formula CF$_y$, and the third fluorinated carbon cathode material has the formula CF$_z$, wherein x has an average value between 0.9 and 1.2, y has an average value between 0.4 to 0.9, and z has an average value between 0.8 and 1.2, the average values of x, y and z preferably being different.

3. The non-aqueous electrochemical cell of any one of claims 1 or 2, wherein the third fluorinated carbon cathode material is derived from beaded petroleum pitch.

4. The non-aqueous electrochemical cell of any one of claims 1 to 3, wherein the first fluorinated carbon cathode material is CF$_1$, the second fluorinated carbon cathode material is CF$_{0.6}$, and the third fluorinated carbon cathode material is CF$_1$.

5. The non-aqueous electrochemical cell of any one of claims 1 to 4, wherein the hybrid cathode contains, by weight of the total amount of fluorinated carbon materials:

   from 30% to 60% first fluorinated carbon cathode material; and/or
   from 5% to 25% second fluorinated carbon cathode material; and/or
   from 20% to 80% third fluorinated carbon cathode material.

6. The non-aqueous electrochemical cell of claim 1, wherein:

   the first fluorinated carbon cathode material has an initial discharge voltage from 2.3 V to 2.7 V, and a discharge capacity of from 800 mAh/g to 870 mAh/g when the first fluorinated carbon cathode material is discharged to 1.5 V; and/or
   the second fluorinated carbon cathode material has an initial discharge voltage of from 2.7 V to 3.1 V, and a discharge capacity of from 680 mAh/g to 800 mAh/g when the second fluorinated carbon cathode material is discharged to 1.5 V; and/or
   the third fluorinated carbon cathode material has an initial discharge voltage from 2.6 V to 3.0 V, and a discharge capacity of from 825 mAh/g to 875 mAh/g when the third fluorinated carbon cathode material is discharged to 1.5 V.

7. The non-aqueous electrochemical cell of any one of claims 1 to 6, wherein the non-aqueous electrolyte comprises a salt having a formula MM'F$_6$ or MM'F$_4$ , wherein M is an alkali metal that is the same as at least one of the metals in the anode and M' is an element selected from the group consisting of phosphorous, arsenic, antimony and boron, and the salt is preferably in an organic solvent at a concentration from 0.5 M to 1.6 M.

8. The non-aqueous electrochemical cell of any one of claims 1 to 7, wherein the non-aqueous electrolyte comprises 1,2-dimethoxyethane, propylene carbonate and LiBF$_4$ salt.

9. The non-aqueous electrochemical cell of any one of claims 1 to 8, wherein the anode comprises:

a metal selected from Group IA or Group IIA of the Periodic Table of the Elements,
preferably a metal selected from the group consisting of lithium, magnesium, sodium and potassium; or
an alloy or intermetallic compounds selected from the group consisting of Li-Mg, Li-Al, Li-Al-Mg, Li-Si, Li-B and Li-Si-B.

10. The non-aqueous electrochemical cell of any one of claims 1 to 9, wherein the cathode contains an electrically conductive additive; the electrically conductive additive preferably being selected from the group consisting of carbon black, natural or synthetic graphite, carbon fibers, carbon nanotubes, coke, charcoal, activated carbon, silver, gold, aluminum, titanium and mixtures thereof.

11. The non-aqueous electrochemical cell of any one of claims 1 to 10, wherein the cathode contains a binder selected from polyvinylidene fluoride (PVDF), polytetrafluoroethylene (PTFE), ultra-high molecular weight polyethylene (UHMWPE), styrene- butadiene rubber, cellulose, polyacrylate rubber, copolymers of acrylic acid or acrylate esters.

12. The non-aqueous electrochemical cell of any one of claims 1 to 11, wherein the first and second fluorinated carbon cathode materials have an average BET surface area of from 120 cm$^2$/g to 450 cm$^2$/g, preferably from 180 cm$^2$/g to 250 cm$^2$/g.

13. The non-aqueous electrochemical cell of any one of claims 3 to 12, wherein the third fluorinated carbon cathode material has an average BET surface area of from 250 cm$^2$/g to 750 cm$^2$/g, preferably from 350 cm$^2$/g to 560 cm$^2$/g.

14. The non-aqueous electrochemical cell of any one of claims 1 to 13, wherein the average particle size of the first and second fluorinated carbon cathode materials is from 0.1 $\mu$m to 800 $\mu$m; preferably from 1 $\mu$m to 200 $\mu$m.

15. The non-aqueous electrochemical cell of any one of claims 3 to 14, wherein the average particle size of the third fluorinated cathode material is from 100 $\mu$m to 1200 $\mu$m, preferably from 150 $\mu$m to 1000 $\mu$m.

**Patentansprüche**

1. Nichtwässrige elektrochemische Zelle, umfassend:

eine Anode;
eine Hybridkathode, umfassend ein erstes fluoriertes Kohlenstoffkathodenmaterial, ein zweites fluoriertes Kohlenstoffkathodenmaterial und ein drittes fluoriertes Kohlenstoffkathodenmaterial, wobei (a) das erste oder das dritte fluorierte Kohlenstoffkathodenmaterial einen durchschnittlichen Fluorierungsgrad aufweist, der sich von dem des zweiten fluorierten Kohlenstoffkathodenmaterials unterscheidet, und (b) das erste fluorierte Kohlenstoffkathodenmaterial von Petrolkoks abgeleitet ist, während das dritte fluorierte Kohlenstoffkathodenmaterial von Petrolpech abgeleitet ist;
einen Separator, der zwischen der Anode und der Kathode angeordnet ist; und,
einen nichtwässrigen Elektrolyten, der in Fluidverbindung mit der Anode, der Kathode und dem Separator steht.

2. Nichtwässrige elektrochemische Zelle nach Anspruch 1, wobei das erste fluorierte Kohlenstoffkathodenmaterial die Formel CF$_x$ aufweist, das zweite fluorierte Kohlenstoffkathodenmaterial die Formel CF$_y$ aufweist und das dritte fluorierte Kohlenstoffkathodenmaterial die Formel CF$_z$ aufweist, wobei x einen Durchschnittswert zwischen 0,9 und 1,2 aufweist, y einen Durchschnittswert zwischen 0,4 und 0,9 aufweist und z einen Durchschnittswert zwischen 0,8 und 1,2 aufweist, wobei die Durchschnittswerte von x, y und z vorzugsweise unterschiedlich sind.

3. Nichtwässrige elektrochemische Zelle nach einem der Ansprüche 1 oder 2, wobei das dritte fluorierte Kohlenstoffkathodenmaterial aus geperltem Petroleumpech abgeleitet ist.

**4.** Nichtwässrige elektrochemische Zelle nach einem der Ansprüche 1 bis 3, wobei das erste fluorierte Kohlenstoffkathodenmaterial $CF_1$ ist, das zweite fluorierte Kohlenstoffkathodenmaterial $CF_{0,6}$ ist und das dritte fluorierte Kohlenstoffkathodenmaterial $CF_1$ ist.

**5.** Nichtwässrige elektrochemische Zelle nach einem der Ansprüche 1 bis 4, wobei die Hybridkathode, bezogen auf das Gewicht der Gesamtmenge an fluoriertem Kohlenstoffmaterial, enthält:

30 % bis 60 % erstes fluoriertes Kohlenstoffkathodenmaterial, und/oder
5 % bis 25 % zweites fluoriertes Kohlenstoffkathodenmaterial, und/oder
20 % bis 80 % drittes fluoriertes Kohlenstoffkathodenmaterial.

**6.** Nichtwässrige elektrochemische Zelle nach Anspruch 1, wobei:

das erste fluorierte Kohlenstoffkathodenmaterial eine anfängliche Entladespannung von 2,3 V bis 2,7 V und eine Entladekapazität von 800 mAh/g bis 870 mAh/g aufweist, wenn das erste fluorierte Kohlenstoffkathodenmaterial auf 1,5 V entladen wird; und/oder
das zweite fluorierte Kohlenstoffkathodenmaterial eine anfängliche Entladespannung von 2,7 V bis 3,1 V und eine Entladekapazität von 680 mAh/g bis 800 mAh/g aufweist, wenn das zweite fluorierte Kohlenstoffkathodenmaterial auf 1,5 V entladen wird; und/oder
das dritte fluorierte Kohlenstoffkathodenmaterial eine anfängliche Entladespannung von 2,6 V bis 3,0 V und eine Entladekapazität von 825 mAh/g bis 875 mAh/g aufweist, wenn das dritte fluorierte Kohlenstoffkathodenmaterial auf 1,5 V entladen wird.

**7.** Nichtwässrige elektrochemische Zelle nach einem der Ansprüche 1 bis 6, wobei der nichtwässrige Elektrolyt ein Salz mit einer Formel $MM'F_6$ oder $MM'F_4$ umfasst, wobei M ein Alkalimetall ist, das dasselbe wie wenigstens eines der Metalle in der Anode ist, und M' ein Element ist, das aus der Gruppe ausgewählt ist, die aus Phosphor, Arsen, Antimon und Bor besteht, und das Salz vorzugsweise in einem organischen Lösungsmittel in einer Konzentration von 0,5 M bis 1,6 M vorliegt.

**8.** Nichtwässrige elektrochemische Zelle nach einem der Ansprüche 1 bis 7, wobei der nichtwässrige Elektrolyt 1,2-Dimethoxyethan, Propylencarbonat und $LiBF_4$-Salz umfasst.

**9.** Nichtwässrige elektrochemische Zelle nach einem der Ansprüche 1 bis 8, wobei die Anode umfasst:

ein Metall, ausgewählt aus der Gruppe IA oder Gruppe IIA des Periodensystems der Elemente, vorzugsweise ein Metall, ausgewählt aus der Gruppe bestehend aus Lithium, Magnesium, Natrium und Kalium; oder
eine Legierung oder intermetallische Verbindung, ausgewählt aus der Gruppe bestehend aus Li-Mg, Li-Al, Li-Al-Mg, Li-Si, Li-B und Li-Si-B.

**10.** Nichtwässrige elektrochemische Zelle nach einem der Ansprüche 1 bis 9, wobei die Kathode ein elektrisch leitfähiges Additiv enthält, das elektrisch leitfähige Additiv ist vorzugsweise aus der Gruppe ausgewählt ist, bestehend aus Ruß, natürlichem oder synthetischem Grafit, Kohlenstofffasern, Kohlenstoff Nanoröhren, Koks, Kohle, Aktivkohle, Silber, Gold, Aluminium, Titan und Mischungen davon.

**11.** Nichtwässrige elektrochemische Zelle nach einem der Ansprüche 1 bis 10, wobei die Kathode ein Bindemittel enthält, das aus Polyvinylidenfluorid (PVDF), Polytetrafluorethylen (PTFE), Polyethylen mit ultrahohem Molekulargewicht (UHMWPE), Styrol-Butadien-Kautschuk, Zellulose, Polyacrylatkautschuk, Copolymeren von Acrylsäure oder Acrylatestern ausgewählt ist.

**12.** Nichtwässrige elektrochemische Zelle nach einem der Ansprüche 1 bis 11, wobei das erste und das zweite fluorierte Kohlenstoffkathodenmaterial einen durchschnittlichen BET-Oberflächenbereich von 120 cm$^2$/g bis 450 cm$^2$/g, vorzugsweise von 180 cm$^2$/g bis 250 cm$^2$/g, aufweisen.

**13.** Nichtwässrige elektrochemische Zelle nach einem der Ansprüche 3 bis 12, wobei das dritte fluorierte Kohlenstoffkathodenmaterial einen durchschnittlichen BET-Oberflächenbereich von 250 cm$^2$/g bis 750 cm$^2$/g, vorzugsweise von 350 cm$^2$/g bis 560 cm$^2$/g, aufweist.

**14.** Nichtwässrige elektrochemische Zelle nach einem der Ansprüche 1 bis 13, wobei die durchschnittliche Partikelgröße des ersten und des zweiten fluorierten Kohlenstoffkathodenmaterials 0,1 $\mu$m bis 800 $\mu$m; vorzugsweise 1 $\mu$m bis 200 $\mu$m, beträgt.

**15.** Nichtwässrige elektrochemische Zelle nach einem der Ansprüche 3 bis 14, wobei die durchschnittliche Partikelgröße des dritten fluorierten Kathodenmaterials von 100 $\mu$m bis 1200 $\mu$m, vorzugsweise von 150 $\mu$m bis 1000 $\mu$m, beträgt.


**Revendications**

**1.** Pile électrochimique non aqueuse comprenant :

une anode ;
une cathode hybride comprenant un premier matériau cathodique de carbone fluoré, un deuxième matériau cathodique de carbone fluoré, et un troisième matériau cathodique de carbone fluoré, (a) le degré de fluoration moyen des premier ou troisième matériaux cathodiques de carbone fluoré se distinguant de celui du deuxième matériau cathodique de carbone fluoré, et (b) le premier matériau cathodique de carbone fluoré étant dérivé du coke de pétrole tandis que le troisième matériau cathodique de carbone fluoré étant dérivé du brai de pétrole ;
un séparateur disposé entre l'anode et la cathode ; et
une électrolyte non aqueuse en communication fluidique avec l'anode, la cathode et le séparateur.

**2.** Pile électrochimique non aqueuse selon la revendication 1, la formule du premier matériau cathodique de carbone fluoré étant $CF_x$, la formule du deuxième matériau cathodique de carbone fluoré étant $CF_y$, et formule du troisième matériau cathodique de carbone fluoré étant $CF_z$, la valeur moyenne de x étant comprise entre 0,9 et 1,2, la valeur moyenne de y étant comprise entre 0,4 et 0,9, et la valeur moyenne de z étant comprise entre 0,8 et 1,2, les valeurs moyennes de x, y et z étant de préférence différentes.

**3.** Pile électrochimique non aqueuse selon une quelconque des revendications 1 ou 2, le troisième matériau cathodique de carbone fluoré étant dérivé de brai de pétrole perlé.

**4.** Pile électrochimique non aqueuse selon une quelconque des revendications 1 à 3, le premier matériau cathodique de carbone fluoré étant du $CF_1$, le deuxième matériau cathodique de carbone fluoré étant du $CF_{0,6}$, et le troisième matériau cathodique de carbone fluoré étant du $CF_1$.

**5.** Pile électrochimique non aqueuse selon une quelconque des revendications 1 à 4, la cathode hybride contenant, en poids de la quantité totale de matériaux de carbone fluoré :

de 30% à 60% du premier matériau cathodique de carbone fluoré ; et/ou
de 5% à 25% du deuxième matériau cathodique de carbone fluoré ; et/ou
de 20% à 80% du troisième matériau cathodique de carbone fluoré.

**6.** Pile électrochimique non aqueuse selon la revendication 1,

la tension de décharge initiale du premier matériau cathodique de carbone fluoré étant comprise entre 2,3 V et 2,7 V, et sa capacité de décharge étant comprise entre 800 mAh/g et 870 mAh/g lorsque le premier matériau cathodique de carbone fluoré est déchargé à 1,5 V ; et/ou
la tension de décharge initiale du deuxième matériau cathodique de carbone fluoré étant comprise entre 2,7 V et 3,1 V, et sa capacité de décharge étant comprise entre 680 mAh/g et 800 mAh/g lorsque le deuxième matériau cathodique de carbone fluoré est déchargé à 1,5 V ; et/ou
la tension de décharge initiale du deuxième matériau cathodique de carbone fluoré étant comprise entre 2,6 V et 3,0 V, et sa capacité de décharge étant comprise entre 825 mAh/g et 875 mAh/g lorsque le troisième matériau cathodique de carbone fluoré est déchargé à 1,5 V.

**7.** Pile électrochimique non aqueuse selon une quelconque des revendications 1 à 6, l'électrolyte non aqueux comprenant un sel dont la formule est $MM'F_6$ ou $MM'F_4$, M étant un métal alcalin qui est le même qu'au moins un des métaux dans l'anode, et M' étant un élément sélectionné dans le groupe composé de phosphore, arsenic, antimoine et bore, et le sel se trouvant de préférence dans un solvant organique à une concentration comprise entre 0,5 M et 1,6 M.

**8.** Pile électrochimique non aqueuse selon une quelconque des revendications 1 à 7, l'électrolyte non aqueux comprenant du 1,2-diméthoxyéthane, du carbonate de propylène et un sel LiBF$_4$.

**9.** Pile électrochimique non aqueuse selon une quelconque des revendications 1 à 8, l'anode comprenant :

un métal sélectionné dans le Groupe IA ou le Groupe IIA du tableau périodique des éléments, de préférence un métal sélectionné dans le groupe composé de lithium, magnésium, sodium et potassium ; ou
un alliage ou des composés intermétalliques sélectionnés dans le groupe composé de Li-Mg, Li-Al, Li-Al-Mg, Li-Si, Li-B et Li-Si-B.

**10.** Pile électrochimique non aqueuse selon une quelconque des revendications 1 à 9, la cathode contenant un additif électro-conducteur ; l'additif électro-conducteur étant sélectionné de préférence dans le groupe composé de noir de carbone, de graphite naturel ou synthétique, de fibres de carbone, de nanotubes de carbone, de coke, de charbon de bois, de charbon activé, d'argent, d'or, d'aluminium, de titane, et de mélanges de ces derniers.

**11.** Pile électrochimique non aqueuse selon une quelconque des revendications 1 à 10, la cathode contenant un liant sélectionné parmi du fluorure de polyvinylidène (PVDF), du polytétrafluoroéthylène (PTFE), du polyéthylène à poids moléculaire ultra-élevé (UHMWPE), du caoutchouc styrène-butadiène, de la cellulose, du caoutchouc de polyacrylate, des copolymères d'acide acrylique, ou des esters d'acrylate.

**12.** Pile électrochimique non aqueuse selon une quelconque des revendications 1 à 11, les premier et deuxième matériaux cathodiques de carbone fluoré présentant une surface spécifique BET comprise entre 120 m$^2$/g et 450 cm$^2$/g, de préférence entre 180 cm$^2$/g et 250 cm$^2$/g.

**13.** Pile électrochimique non aqueuse selon une quelconque des revendications 3 à 12, le troisième matériau cathodique de carbone fluoré présentant une surface spécifique BET comprise entre 250 m$^2$/g et 750 cm$^2$/g, de préférence entre 350 cm$^2$/g et 560 cm$^2$/g.

**14.** Pile électrochimique non aqueuse selon une quelconque des revendications 1 à 13, la granulométrie moyenne des premier et deuxième matériaux cathodiques de carbone fluoré étant comprise entre 0,1 $\mu$m et 800 $\mu$m, de préférence entre 1 $\mu$m et 200 $\mu$m.

**15.** Pile électrochimique non aqueuse selon une quelconque des revendications 3 à 14, la granulométrie moyenne du troisième matériau cathodique de carbone fluoré étant comprise entre 100 $\mu$m et 1 200 $\mu$m, de préférence entre 150 $\mu$m et 1 000 $\mu$m.

# FIGURE 1

# FIGURE 2

# FIGURE 3

EP 2 507 857 B1

FIGURE 4

# FIGURE 5

FIGURE 6

EP 2 507 857 B1

FIGURE 7

FIGURE 8

EP 2 507 857 B1

FIGURE 9

EP 2 507 857 B1

## FIGURE 10

EP 2 507 857 B1

# FIGURE 11

EP 2 507 857 B1

# FIGURE 12

# FIGURE 13

EP 2 507 857 B1

# FIGURE 14

FIGURE 15

**REFERENCES CITED IN THE DESCRIPTION**

**Patent documents cited in the description**

- US 61266628
- WO 2008113023 A1
- JP 2006236888 A
- US 614667
- US 20100221616 A